# EUROPEAN PATENT SPECIFICATION

(11) **EP 3 541 587 B1**
(45) Date of publication and mention of the grant of the patent: **08.05.2024**
(21) Application number: 17871122.2
(22) Date of filing: 19.11.2017
(51) Int. Cl.: B41J 3/407, B41J 3/54

(54) **EQUIPMENT FOR TREATING OBJECTS**
VORRICHTUNG ZUR BEHANDLUNG VON OBJEKTEN
ÉQUIPEMENT POUR TRAITEMENT D'OBJETS

(30) Priority: 18.11.2016 US 201615355430
(43) Date of publication of application: 25.09.2019
(73) Proprietor: Velox-Puredigital Ltd., Rosh Ha'ayin 4809114 (IL)
(72) Inventor: LITVINOV, Alexander, 4249098 Netanya (IL); COFLER, Marian, 4030000 Kfar Yona (IL); FEINSCHMIDT, Avi, 5841021 Holon (IL); COFLER, Adrian, 7080000 Gan Yavne (IL); LEVI, Yaakov, 4030825 Kfar Yona (IL); RAZ, Itay, 7680400 Mazkeret Batia (IL)
(74) Representative: Kramer, Dani
(86) International application number: PCT/IL2017/051262
(87) International publication number: WO 2018/092143

(56) References cited:
- WO-A1-2014/053541
- WO-A1-2015/177599
- DE-A1- 4 224 100
- DE-T2- 68 913 121
- US-A- 4 770 456
- US-A- 4 993 651
- US-A- 5 217 175
- US-A1- 2007 222 245
- US-A1- 2007 222 245
- US-A1- 2007 241 578
- US-A1- 2013 251 497
- US-A1- 2015 258 691

## Description

### TECHNOLOGICAL FIELD

The invention generally relates to techniques for treatment and inspection of surfaces of objects, for holding objects for treatment or inspection, and in particular for printing on curved surfaces of objects.

### BACKGROUND

Digital printing is a printing technique commonly used in the printing industry, as it allows for on-demand printing, short turn-around, and even a modification of the image (variable data) with each impression. Some of the techniques developed for printing on a surface of a three-dimensional object are described hereinbelow.

US Patent No. 7,467,847 relates to a printing apparatus adapted for printing on a printing surface of a three-dimensional object. The apparatus comprises an inkjet printhead having a plurality of nozzles, and being operative to effect relative movement of the printhead and the object, during printing, with a rotational component about an axis of rotation and with a linear component, in which the linear component is at least partially in a direction substantially parallel with the axis of rotation and wherein the nozzle pitch of the printhead is greater than the grid pitch to be printed onto the printing surface in the nozzle row direction.

US Patent No. 6,769,357 relates to a digitally controlled can printing apparatus for printing on circular two-piece cans, the apparatus including digital print-heads for printing an image on the cans and drives for transporting and rotating the cans in front of the print-heads in registered alignment.

US Patent Application No. 2010/0295885 describes an inkjet printer for printing on a cylindrical object using printheads positioned above a line of travel and a carriage assembly configured to hold the object axially aligned along the line of travel and to position the object relative to the printheads, and rotate it relative to the printheads. A curing device located along the line of travel is used to emit energy suitable to cure the deposited fluid.

German Patent Publication No. DE 68913121 discloses a yarn winding apparatus for high speed yarn winding with long spindles and multiple bobbins having a reduced diameter, the apparatus having spindles with one or both of the bobbin holder or driving shaft made of a composite layer made of reinforcing member made of metal provided on at least one of an inner surface and outer surface of the composite layer.

### GENERAL DESCRIPTION

There is a need in the art for object processing techniques that allow expediting treatment/printing processes applied to external surfaces of objects arranged in a form of an array of objects, while enabling maximal utilization (high efficiency) of the treatment/printing technology by allowing treating objects having curved surfaces of various sizes, as well as providing efficient inspection of the applied treatment/pattern being printed on the curved surfaces of the objects. It is also required that such objects treatment/printing techniques enable applying simultaneous treatment/printing to multiple objects, and retain a relatively high treatment/printing resolution, with very high system accuracies (microns), which is very challenging for real production line use. Therefore, maintaining a high efficiency level by maximizing the treatment/printing engine utilization is necessary in such techniques to perform production runs.

The present disclosure describes machinery and techniques devised for applying treatment processes to surfaces of objects arranged in a form of an array of objects, and for inspecting surface areas of the objects in such object arrays before and/or after applying the surface treatment processes thereto. The treated objects are held by an array of grippers/mandrels, each gripper/mandrel is configured to receive a respective object of the array, and to controllably generate gripping contact with internal surface(s) of the received object, for attaching the object thereto. The grippers/mandrels mounted on a movable platform for axially moving the array of objects thereby carried along a lane, and/or rotate the objects about their longitudinal axes. The grippers/mandrels are positioned on the support platform (also referred to herein as carriage) such that their longitudinal axes are substantially parallel to the direction of movement the platform/carriage (*i.e*., parallel to the lane).

The grippers/mandrels comprise friction imparting element(s) configured to be controllably changed between a contracted/non-gripping state, and a deployed/gripping state. In the deployed/gripping state, one or more friction imparting element(s) are engaged with inner wall of the object placed over the mandrel to attach the object thereto. In the deployed/gripping state one or more friction imparting element(s) radially project from the grippers/mandrels and pressed against internal wall surfaces of the objects, to apply gripping forces thereover.

One or more elastically/flexibly deformable tubular elements are used in each grippers/mandrel to contact the inner surfaces of the object.

Each gripper/mandrel comprises a deformable tubular element configured to be controllably changed between an extended/non-gripping state, and a pressed/gripping state. In the extended state the tubular element is longitudinally stretched such that it is substantially held below the surface of the gripper/mandrel, thereby allowing placing an object thereon substantially without applying resistive frictions forces. The gripper/mandrel changed into the pressed state by longitudinally compressing the deformable element such that circular sections thereof are radially projected above the surface area of the gripper/mandrel and pressed against internal wall surfaces of the object, thereby attaching the object thereto.

The different grippers/mandrels embodiments disclosed herein configured to include fluid/air passages along their lengths for preventing buildup of resistive pressures inside the objects while they are being placed over, or removed from, the grippers/mandrels. The fluid/air passages are configured to expel fluid/air from the internal volume of the object as the object is slid over and onto the gripper/mandrel, and to stream fluid/air into the internal volume of the object as the object is being removed by sliding it over and away from gripper/mandrel.

The grippers/mandrels arranged in one or more rows on the movable platform for receiving and holding the array of objects, and moving the array of objects thereby held along a lane comprising equipment for applying one or more object treatment processes, and/or for inspecting surfaces of the objects of the objects array carried by the grippers/mandrels. Each support platform/carriage comprises two rows of grippers/mandrels extending in opposite directions from opposite sides of support member(s) of the support platform/carriage. Each row of grippers/mandrels can be provided in a form of a detachable wing of grippers/mandrels, allowing to quickly replace all grippers/mandrels of the row at once.

Two wings of mandrels are provided in a single detachable double sided wing block assembly, configured to allow quickly replacing all grippers/mandrels of the two rows of grippers/mandrels as a single block at once. The support platform/carriage comprises a detachable motor module comprising one or more motors/engines, and mechanical transmission components, configured to transfer rotary movement of the one or more engines/motors to the grippers/mandrels.

The support platform/carriage comprises a respective motor for each pair of adjacently located grippers/mandrels belonging to different rows of grippers/mandrels.

An object immobilizing system, not being part of the present invention, can be used to set the angular positions of one or more, or all, of the objects carried by the carriage into a predefined angular position. The immobilizing system comprises an array of immobilizing units, each configured to immobilize an object placed over one of the grippers/mandrels while a fluid/air buffering sleeve is thereby formed to prevent rotation of the object while the mandrel is being rotated. In this way the mandrels of the carriage can be rotated while some of the objects are immobilized by the immobilizing units, and thus stand still without being rotated, such that only objects not immobilized by the immobilizing units are rotated.

The immobilizing units, not being part of the present invention, are configured to immobilize one row of the carried objects while fluid/air buffering sleeves are formed by their grippers/mandrels, to thereby prevent rotary motion thereof while the mandrels are being rotated. Accordingly, the objects in other row(s) of objects, which are not immobilized by the immobilizing units, can be rotated until reaching a desired angular position. In this way, each of the objects in the row(s) which are not being immobilized can be aligned with at least one other object that is being immobilized by one of the immobilizing units. This way, angular position of the objects in the one row are set into a desired/predefined position before forming the fluid/air buffers and immobilizing them. Thereafter, the objects in the one row are immobilized and all objects in the other row(s) are rotated to align them with respective objects in the immobilized row, thereby setting all of the objects in the carried array into the same angular position.

The immobilizing units, not being part of the present invention, configured to apply attraction forces over the objects, and thereby hold them substantially immobilized due to the fluid/air buffering sleeves formed by their grippers/mandrels. The attraction forces applied using suction/vacuum applicators, electromagnets, electric fields applicators, electrostatic forces applicators, or any combination thereof.

This technique, not being part of the present invention, align each mandrel/gripper in each row mandrel/gripper carried by a support platform into a desired different, or same, angular position, and/or to align each row of mandrel/gripper of the support platform into a respective different (or same) desired angular position. These alignment schemes, not being part of the present invention, can be further used to align each object on each support platform of the system into a desired different, or same angular position, or to align each row of each support platform into a respective different, or same, angular position.

The immobilizing units of the object immobilizing system, not being part of the present invention, are configured to move with respect to the objects (up and down) in order to adjust their distance from the object and thereby adapt to the diameter of the mandrel/gripper, and/or the object to be treated.

One or more sensor units, not being part of the present invention, can be used for recognition of variety of cap shaped objects, three-dimensional cap-shaped structures. The sensor units used to identify an alignment mark pre-printed on the objects, and/or a stitch located on the objects/tubes (*e.g*., on a laminate, or three-piece welded object such as can), and/or an unseen visual stitch that has a change in material properties at the stitch area that could be recognized by different type of sensor technology, for allowing properly aligning the objects into the a desired, and/or same, angular position.

The system includes sensor units, not being part of the present invention, configured for object existence validation to detect the presence or absence of an object over a gripper/mandrel, and/or for conducting length measurements to determine the length of the objects placed over the mandrels. The sensor units configured for measuring the object/cap length and the length of its body length, two-dimensional longitudinal (length and height) structure, as well as three-dimensional rotational and longitudinal structure.

The inspection of the objects in the array of obj ects, not being part of the present invention, is carried out using at least one movable imaging unit. The movable imaging unit is configured to slide in sideway directions over (or below) a row of objects and acquire imagery data. The objects can be held stationary during the movement of the imaging unit and image acquisition, or alternatively, they can be moved axially and/or angularly. The imaging unit, not being part of the present invention, is configured to slide over one or more rails positioned above/below one row of objects in the array of objects carried by the support platform/carriage. The one or more rails, not being part of the present invention, can be configured to move in lengthwise directions, thereby moving the imaging unit thereby carried along the lengths of the objects in the inspected row of obj ects.

The imager, not being part of the present invention, is configured for sliding movement for acquiring at least one image from each one of the objects within each sliding movement. The processing unit, not being part of the present invention, can be used to construct for each object a mosaic image from the images acquired therefrom.

Two or more imaging units, not being part of the present invention, carried by a respective plurality of movable rails can be used for inspecting respective two or more rows of objects of the array of obj ects. The inspection system, not being part of the present invention, can comprise a respective movable imaging unit carried by its respective movable rail(s) system for inspecting each row of objects in the array of objects. The inspection system, not being part of the present invention, can be thus configured to assign a stationary or movable imaging unit for each row of objects in the array of objects, or in certain cases, assign two or more of the movable imaging units to inspect a certain row of objects in the array of objects carried by the support platform/carriage.

The imaging unit, not being part of the present invention, can be comprised of at least one image inspection sensor/camera, at least one auto registration sensor/camera, and at least one color management sensor/camera.

One inventive aspect of the subject matter disclosed herein relates to a gripper for holding a hollow object thereon, set out in the appended set of claims. The gripper comprising a body assembly configured to be at least partially received inside the object and comprising a hollow part extending along a length thereof, one or more friction imparting elements located in or on the body assembly and configured to change between an engaged state in which contact with inner surface of the object placed over the gripper is established therewith, and a released state in which there is no contact with the inner surface of the object, an attachment mechanism configured to cause the one or more friction imparting elements to engage the inner surface of the object when said object is placed over the gripper.

The attachment mechanism is configured to cause the one or more friction imparting elements to emerge from the body assembly and to extend above surface areas thereof.

The attachment mechanism is configured to have a ground/normal state in which the one or more friction imparting elements are set into the engaged state. The attachment mechanism comprises an actuator unit placed inside the body assembly and configured to change the one or more friction imparting elements into the released state for allowing placement of the object on, or removal of the object from, the gripper. The actuator configured to apply fluid pressure to change into the release state. The actuator unit comprises at least one fluid channel passing along a length of the body assembly, the fluid channel being configured for receiving and flowing fluid in a first direction from a proximal end of the channel for applying the fluid pressure over the one or more friction imparting elements.

The one or more friction imparting elements comprises at least one deformable element attached to the body assembly. The attachment mechanism configured to compress the at least one deformable element in the ground/normal state such that some portion thereof is caused to protrude from the body assembly and contact an inner wall of the object placed thereover, and to stretch the at least one deformable element responsive to the application of the fluid pressure to radially retract said some portion of the at least one deformable element and release the object.

The body assembly comprises a cap element at a distal end of the gripper, a piston arrangement having a piston in fluid communication with the distal end of the hollow channel, and configured such that the fluid is directed to flow toward the piston from the distal end of the channel, in a second direction opposite to first direction, and move the piston along the second direction. The deformable element attached by one end thereof to the piston arrangement and by another end thereof to the cap element, such that the movement of the piston arrangement in the second direction in response to the fluid pressure causes the stretch of the deformable element. The gripper further comprises an elastic element coupled to the piston arrangement and being configured for applying on the piston arrangement a force in the first direction. The elastic element comprises at least one spring.

The cap element comprises at least one first perforation configured to expel air from inside of the object into a region inside or outside the gripper. The body assembly comprise a sleeve element surrounding at least a portion of the hollow channel, and one or more support elements mounted or formed inside the sleeve element for connecting between the sleeve and fluid channel. One or more second perforations formed in the one or more support elements are used for passage of the expelled air to the external environment.

The at least one spring is disposed between piston arrangement and one of the one or more support elements.

The cap element comprises an internal cavity in fluid communication with a distal end opening of the fluid channel, and one or more fluid passages configured to direct fluid received from the fluid channel towards the piston. The cap element can comprise a barrel structure in fluid communication with the one or more fluid passages of the cap element and configured to sealably and movably accommodate the piston. In some embodiments the barrel and the piston arrangement are surrounding the fluid channel, and the piston arrangement is configured to sealably slide over the fluid channel in response to the fluid pressure.

In a modular system for holding and moving a plurality of objects a motor unit having a first plurality of ports and a second plurality of ports, disposed in two groups on opposite sides of the motor unit, a first plurality and a second plurality of mandrels, each mandrel being configured for holding a respective one of the objects, a first wing and a second wing, the first wing connecting the first plurality of mandrels to the first plurality of ports, and the second wing connecting the second plurality of mandrels to the second plurality of ports, in order to enable the motor unit to move each mandrel individually. The first plurality of mandrels and the first wing form a first module, the first module being detachable from the motor unit, and the second plurality of mandrels and the second wing form a second module, the second module being detachable from the motor unit.

In a modular system for holding and moving a plurality of objects a motor unit having a first plurality of ports and a second plurality of ports, disposed in two groups on opposite sides of the motor unit, a plurality of mandrels, each mandrel being configured for holding a respective one of the objects, the mandrels being connected to the ports of the motor unit in order to enable the motor unit to move each mandrel individually, and a wagon unit, joined to the motor unit, configured for carrying the motor unit and the mandrels joined thereto along a desired path. The motor unit, together with the mandrels joined thereto, detachable from the carriage. The plurality of mandrels provided in a form a single replaceable block of mandrels.

An inspection system, not being part of the present invention, comprising at least one moveable imager unit configured to acquire fractional images of the objects. The at least one movable imager unit is configured to move along a row of the objects. Additionally, or alternatively, the at least one movable imager is configured to move along a length of the objects.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings. Features shown in the drawings are meant to be illustrative of only some embodiments of the invention, unless otherwise implicitly indicated. In the drawings like reference numerals are used to indicate corresponding parts, and in which:

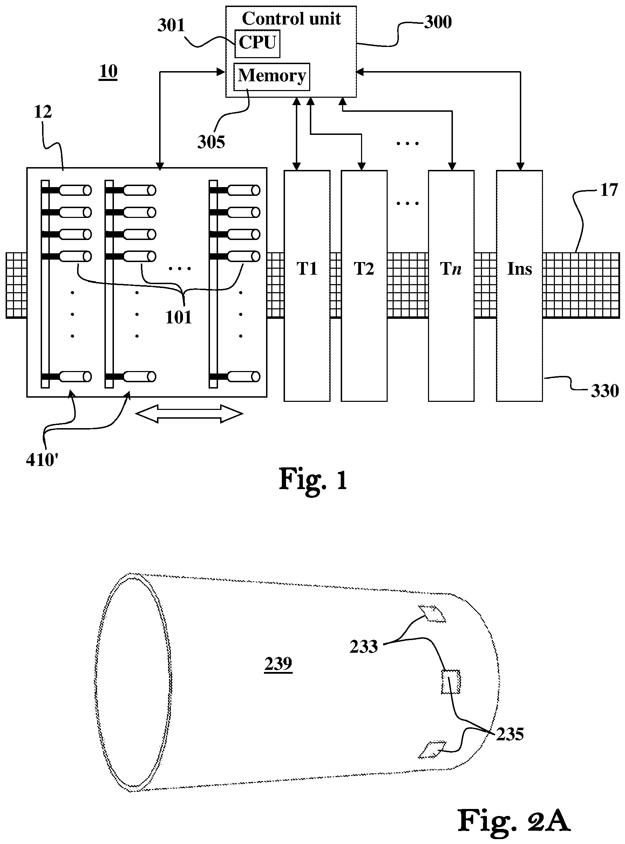

**Fig. 1** schematically illustrates a system configured for treating one or more arrays of objects carried by a movable support platform, according to some possible embodiments;

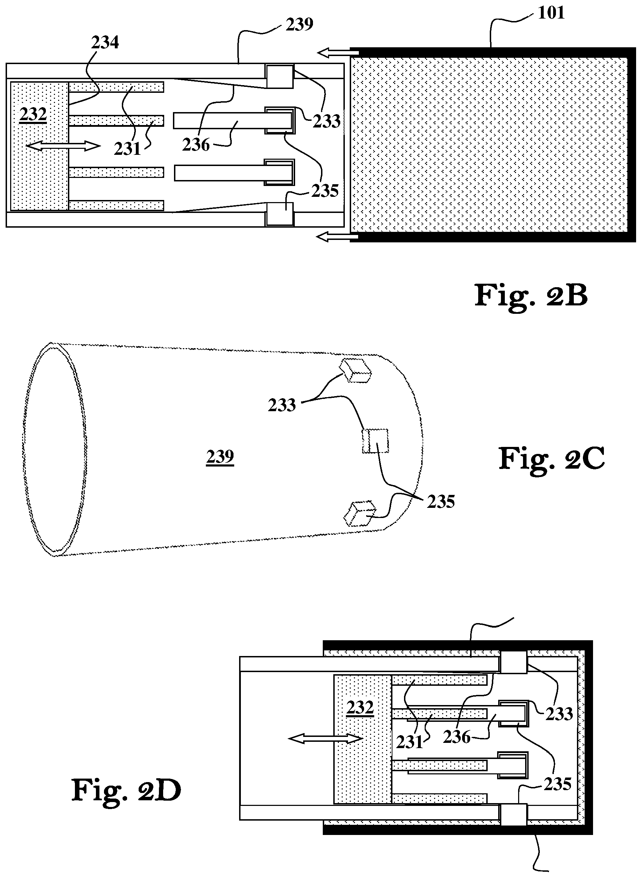

**Figs. 2A** to **2D** schematically illustrate a mandrel configuration utilizing movable immobilizing elements to grip objects having different inner diameters, wherein **Figs. 2A** and **2B** show perspective and sectional views of the mandrel with its immobilizing elements in a retracted state, respectively, and **Figs. 2C** and **2D** show perspective and sectional views of the mandrel with its immobilizing elements in an ejected state, respectively;

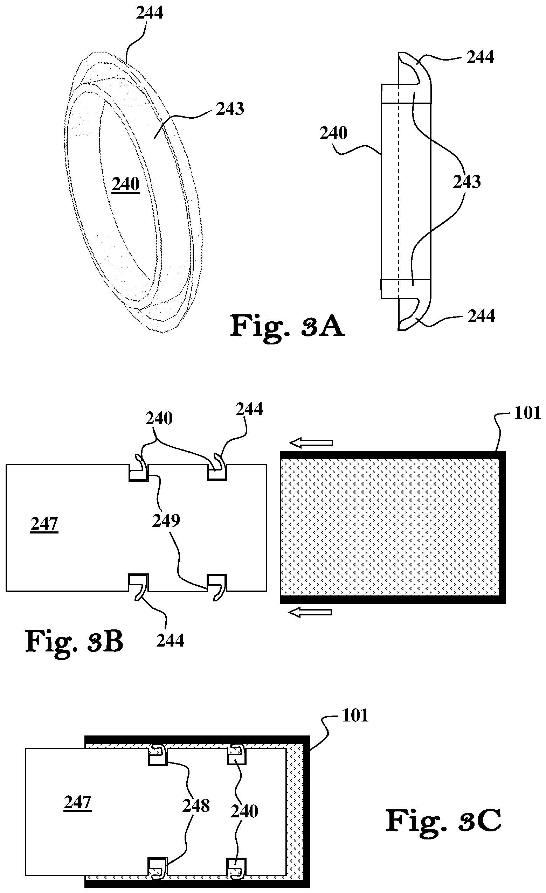

**Figs. 3A** to **3C** schematically illustrate a mandrel configuration utilizing ring shaped flexible/elastic friction imparting element(s) to grip objects having different inner diameters, wherein **Fig. 3A** shows perspective and sectional views of the flexible/elastic friction imparting element, and **Figs. 3B** and **3C** show sectional views of the gripper before and after placing an object thereover;

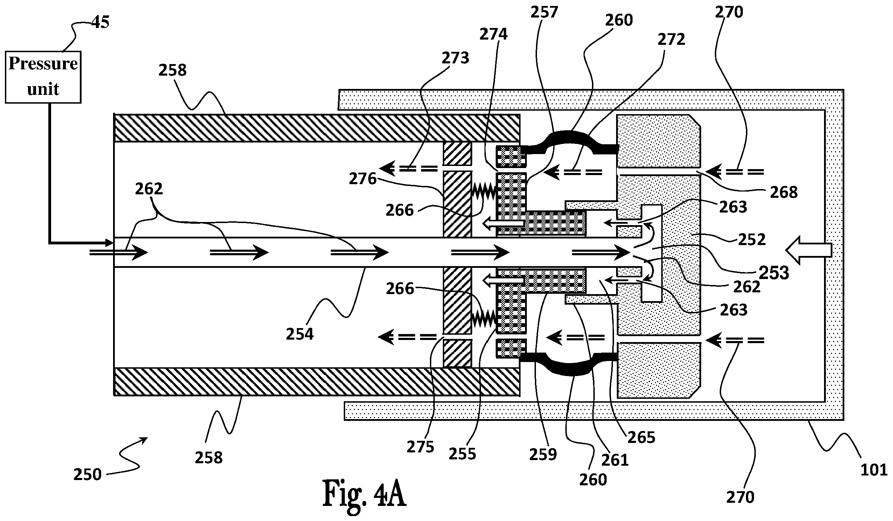

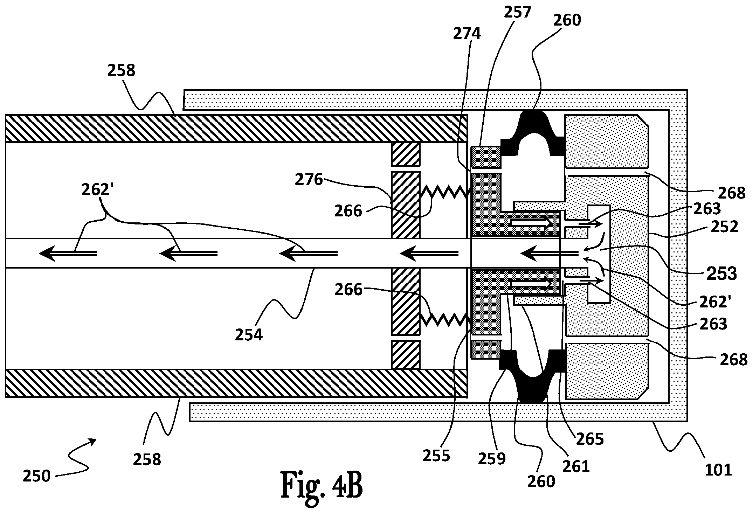

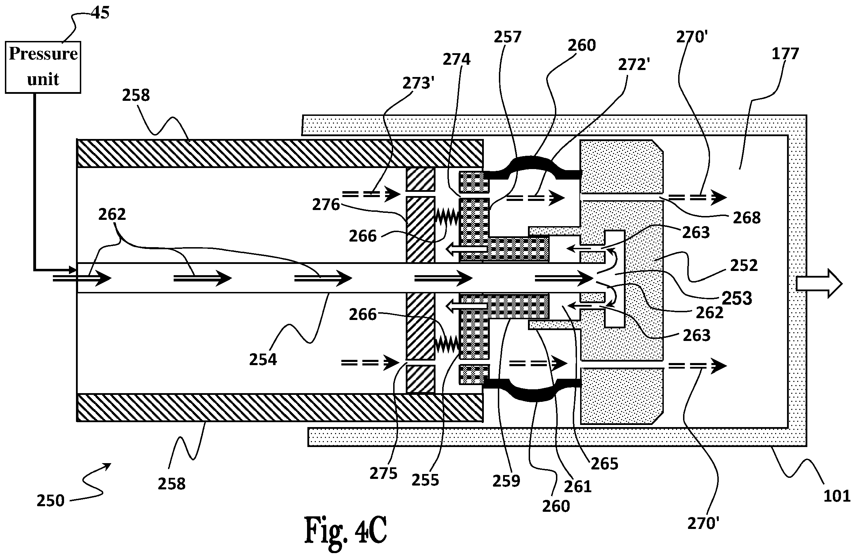

**Figs. 4A** to **4C** schematically illustrate a mandrel (also referred to herein as a gripper) configuration of some possible embodiments utilizing a deformable (flexible/elastic) friction imparting element to grip objects when the deformable element is compressed, wherein **Fig. 4A** show sectional view of the mandrel during placement of an object thereover, **Fig. 4B** show a sectional view of the mandrel after gripping an object placed thereover, and **Fig. 4C** show sectional view of the mandrel during removal of the object therefrom;

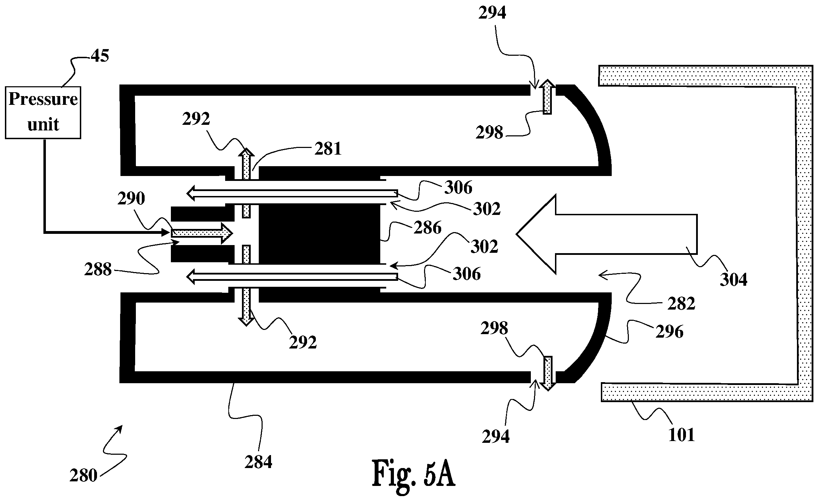

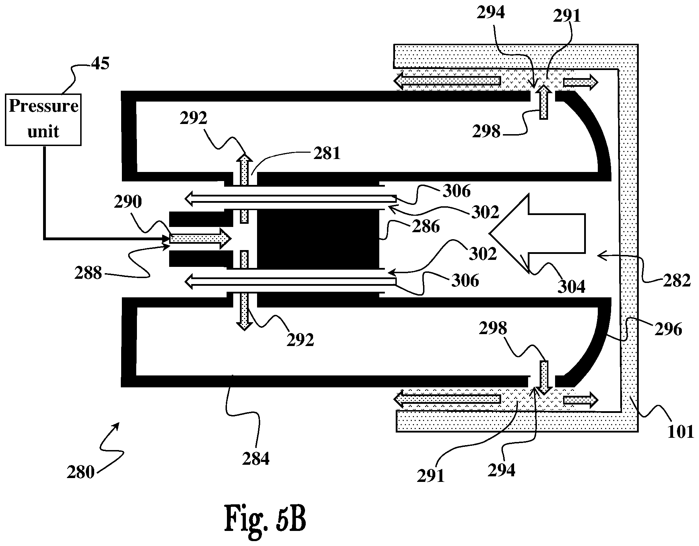

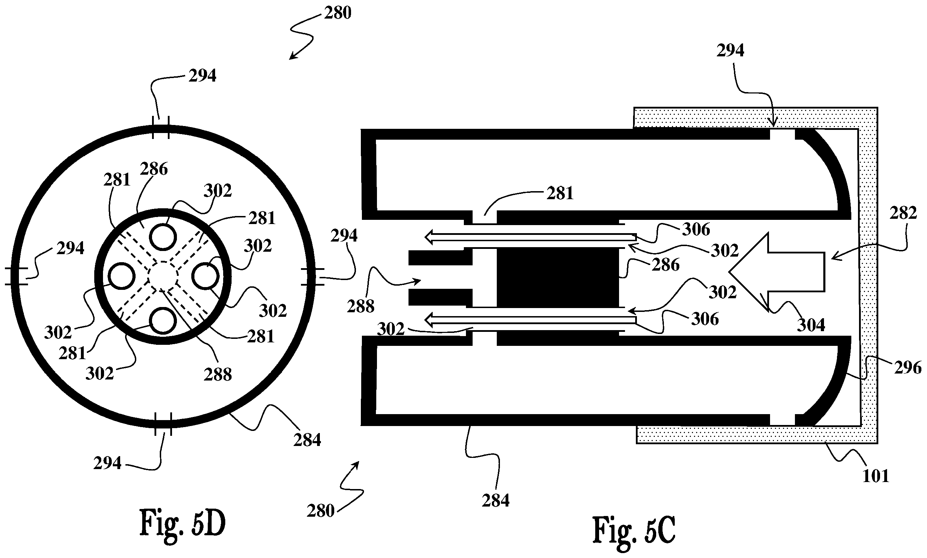

**Figs. 5A** to **5D** schematically illustrate a mandrel configuration configured to build a fluid buffer/sleeve thereabout for placing an object thereover, wherein **Figs. 5A** and **5B** show sectional views of the mandrel demonstrating formation of the fluid buffer/sleeve and placing of the object over the mandrel, **Fig. 5C** shows a sectional view of the mandrel after air pressure has been decreased/stopped to remove the fluid buffer/sleeve and attach the object to the mandrel, and **Fig. 5D** shows a top view of the mandrel;

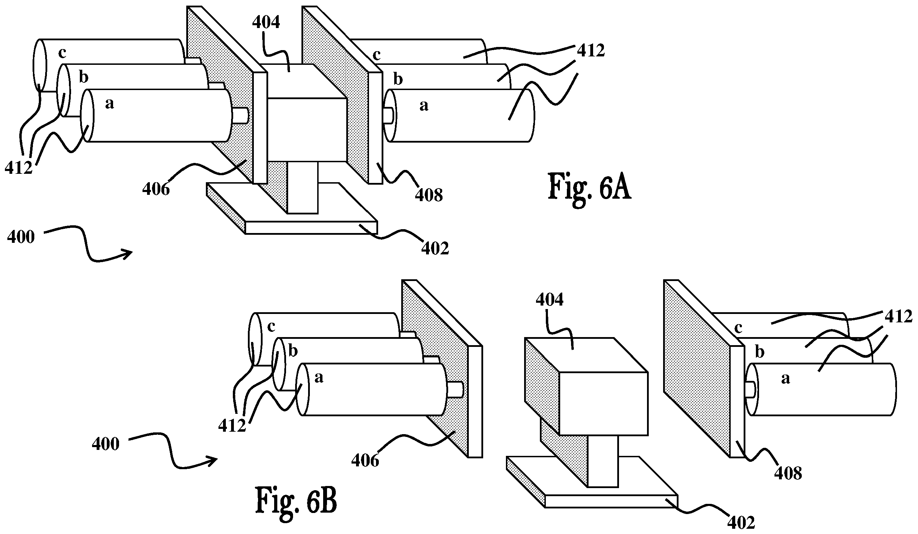

**Figs. 6A** and **6B** schematically illustrate a carriage system configured for carrying and moving two or more arrays of object grippers/mandrels, where each array of grippers is implemented by a detachable and replaceable wing of grippers; and

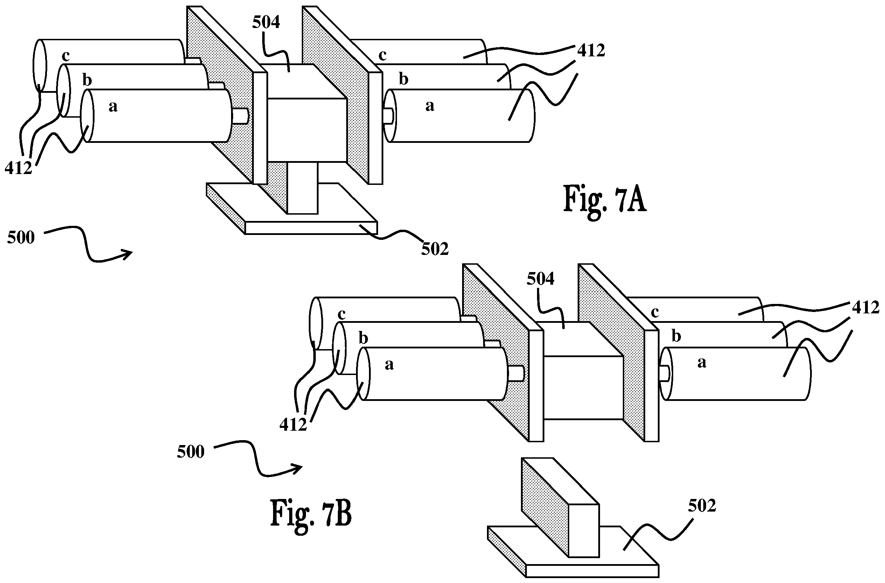

**Figs. 7A** and **7B** schematically illustrate a modular carriage system configured for carrying and moving two or more arrays of object grippers/mandrels, where the system comprising a detachable and replaceable block of object grippers/mandrels, and a detachable and replaceable block of motors;

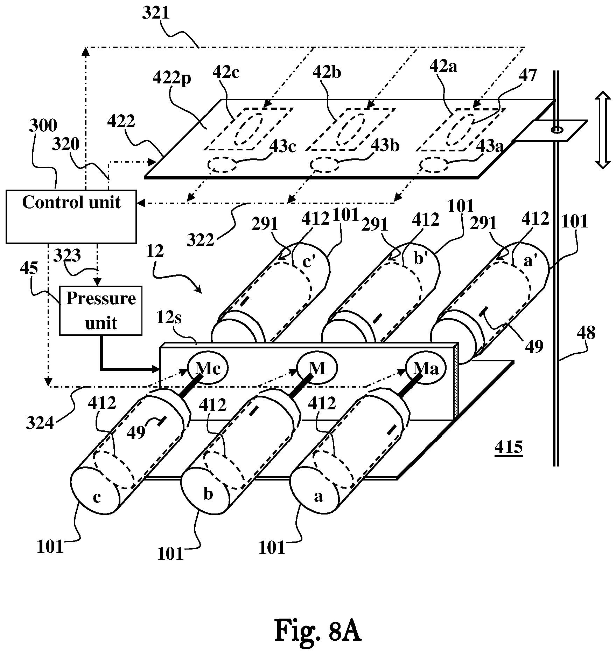

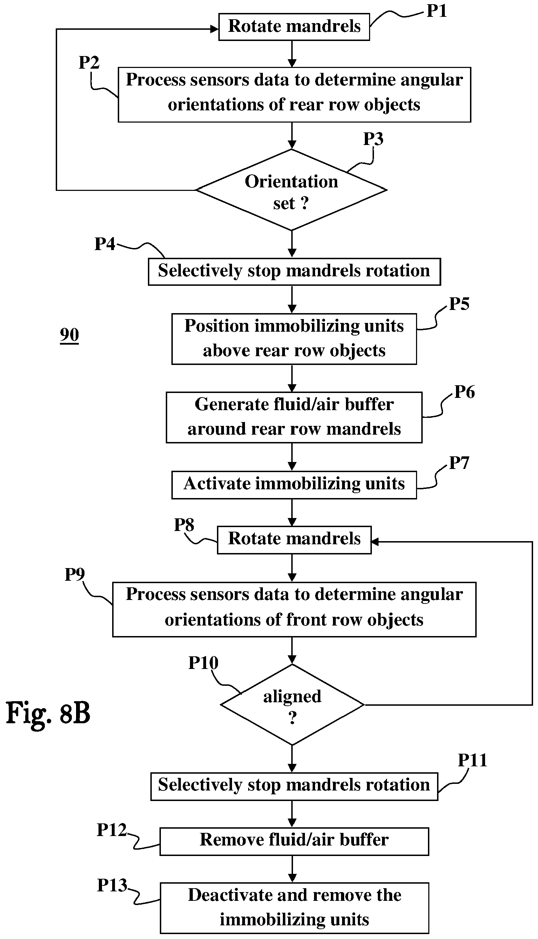

**Figs. 8A** and **8B** schematically illustrate a registration technique for aligning angular orientation of objects carried by the carriage system, wherein **Fig. 8A** illustrates a registration system and its use and **Fig. 8B** is a flowchart illustrating a registration process; and

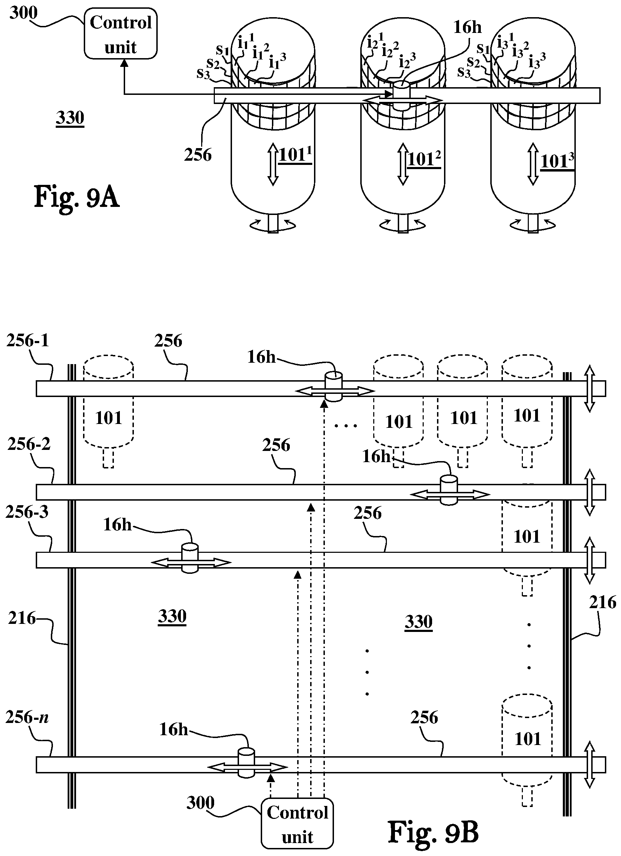

**Figs. 9A** and **9B** schematically illustrate imaging systems configured for inspection of a plurality of objects, wherein **Fig. 9A** demonstrates an imaging unit comprising a movable imager assembly utilizing a single imager for scanning outer surfaces of objects in an array of objects, by acquiring a plurality of small images along circumferential strips of the objects, and **Fig. 9B** demonstrates use of a plurality of movable imaging units, each comprising a movable imager assembly as shown in **Fig. 9A****,** configured for scanning outer surfaces of objects of a plurality of array of objects.

### DETAILED DESCRIPTION OF EMBODIMENTS

The various embodiments of the present invention are described below with reference to the drawings, which are to be considered in all aspects as illustrative only and not restrictive in any manner. In an effort to provide a concise description of these embodiments, not all features of an actual implementation are described in the specification. Elements illustrated in the drawings are not necessarily to scale, or in correct proportional relationships, which are not critical. Emphasis instead being placed upon clearly illustrating the principles of the invention to allow persons skilled in the art to make and use it, once they understand its principles. This invention may be provided in other specific forms and embodiments without departing from the essential characteristics described herein.

**Fig. 1** schematically illustrates a system **10** configured for treating one or more arrays of objects **101** carried by a movable support platform **12** over a lane **17.** One or more object treatment processes **T1, T2** ... **T*n*,** can be applied at one or more object treatment zones along the lane **17.** At least one of the treatment processes **T1, T2** ... **T*n*,** is applied to external surfaces of the objects **101** carried by the support platform **12** along the lane **17** as the support platform passes through the respective object treatment zone.

The treatment processes **T1, T2** ... **T*n*,** comprise printing at least on outer surfaces of the objects **101,** cleaning at least the outer surfaces of the objects **101,** ink curing treatment (*e.g*., UV curing), surface treatments comprising plasma treatment, corona treatment, treatment by electromagnetic radiation such as laser light, or any combination of these treatments. The lane is a closed loop lane, and the support platform is configured to carry one or more arrays of the objects **101** thereon, as described in international patent publication No. WO 2014/076704 and/or WO 2015/177599, of the same applicant.

A control unit **300** comprising one or more processors **301** and memories **305** used to monitor and control the movement of the support platform **12** along the lane **17,** and the application of the one or more treatment processes **T1, T2** ... **T*n*,** to the objects **101** carried thereon. The support platform **12** comprises one or more arrays of object grippers **410',** each object gripper **410'** configured to receive and hold one object **101** thereon. Each object gripper is also configured to controllably rotate the object **101** thereby held about an elongated axis thereof, responsive to control signals/data received from the control unit **300.**

Each array of grippers **410'** is configured to hold one row of objects **101,** and the objects rows of the grippers arrays **410'** are arranged substantially parallel one to the other. As will be demonstrated herein below with reference to **Figs. 6** to **8****,** each array of grippers **410'** is configured to receive and hold at least two rows of the objects **101.** Each row of objects **101** is arranged on the support platform **12** along an axis being substantially perpendicular to the direction of movement of the support platform **12** (perpendicular to the lane), and the objects **101** are held by the grippers such that the elongated axis of each held object **101** is substantially parallel to the movement direction of the support platform **12** (parallel to the lane).

**Figs. 2A** to **2D** schematically illustrate a mandrel **239** (also referred to herein as a gripper), not being part of the present invention, utilizing movable immobilizing elements **235** (also referred to herein as contact pads *e.g*., made of rubber) configured to grip and immobilize hollow cylindrical objects **101** having different inner diameters. With reference to **Fig. 2A****,** the mandrel **239** comprises a cylindrical hollow body comprising a plurality of openings **233,** circularly arranged spaced apparat along a circumference thereof *i.e.,* forming a ring of openings in the mandrel. As better seen in **Fig. 2B****,** a plurality of discrete friction imparting elements **235** are disposed in (or beneath) a respective one of the plurality of the plurality of openings **233,** configured for being radially and reversibly pushed through their respective openings **233.** An actuator assembly **232** mounted inside the mandrel **239** is configured to controllably and concurrently eject the friction imparting elements **235** through their respective openings **233.**

The friction imparting elements **235** are movably attached to the inner wall of the mandrel by an elastic, or resilient, element **236** (*e.g*., a flat elongated return/pressure/leaf spring) configured to position each friction imparting element **235** beneath, or slightly inside, its respective opening **233,** in a rest state. The actuator assembly **232** comprises a base section **234** configured to axially slide inside the mandrel **239** along its length *e.g.*, by using electrical motor(s) and suitable transmission mechanism (not shown), and a plurality pushing arm **231** axially extending from the base section **234** towards the openings **233.**

For each friction imparting element **235** of the mandrel there is a respective pushing arm **231** in the actuator assembly **232.** This way, whenever an object **101** is placed over the mandrel **239** for process treatment (*e.g*., for printing thereon), the actuator **232** is moved axially towards the openings **233,** such that each pushing arm **231** contacts and slide over a respective one of the elastic elements **236** and press it against/towards the inner wall of the mandrel, thereby causing the elastic element **236** to radially push the friction imparting element **235** attached thereto outwardly through its respective opening **233,** as illustrated in **Fig. 2C****.**

As shown in **Fig. 2D****,** in the pressed state of the elastic elements **236,** anterior portion of each friction imparting element **235** protrudes outwardly through the respective opening **233** for contacting discrete inner surfaces of the object **101,** and thereby gripping and immobilize the object **101** over the mandrel **239.** When it is needed to remove the object **101** from the mandrel **239,** the actuator **232** is moved in the opposite direction *i.e.*, away from the openings **233,** back to its retracted position (shown in **Fig. 2B**), thereby releasing the pressed elastic elements **236** to restore their rest states, causing the friction imparting elements **235** to radially retract inwardly through their respective openings **233,** and releasing the grip over the object **101.** A movable pushing ring or piston can be used instead of the pushing arm **231** to concurrently press all of the elastic elements **236** for applying the gripping forces thereon by the friction imparting elements **235.**

**Figs. 3A** to **3C** schematically illustrate a mandrel **247** (also referred to herein a gripper), not being part of the present invention, utilizing a ring-shaped flexible/elastic friction imparting element **240** configured to grip and immobilize hollow cylindrical objects **101** having different inner diameters. As shown in **Fig. 3B****,** the mandrel **247** comprises a cylindrical body having one or more circumferential grooves **249** formed on its outer surface, and one or more-ring shaped flexible friction imparting elements **240** placed inside the grooves, and configured to contact circular inner surfaces of an object **101** placed over the mandrel **247,** and immobilize it thereover.

As shown in **Fig. 3A****,** the ring-shaped friction imparting element **240** comprises a circular base **243** section configured to snugly fit inside the circumferential groove **249** of the mandrel **247,** and a bendable/elastic circular skirt section **244** *(e.g.,* made of rubber) anteriorly extending from the circular base section **243.** As seen in **Fig. 3B** the bendable circular skirt section **244** is configured to movably protrude outwardly through the circumferential groove **249** above the external surface of the mandrel **247,** and as seen in **Fig. 3C****,** it is reversibly pushed inwardly towards the circumferential groove **249** when pressed by the inner surface of the object **101** placed over the mandrel **247.** In this state the bended circular skirt section **244** is pressed against a circular inner surface of the object **101,** thereby gripping and immobilizing the object **101** placed over the mandrel **247.** The grip power exerted by the bendable skirt **244** is configured to facilitate removal of the object by simply sliding it axially against the friction imparted by bendable skirt **244** over the internal wall of the object **101.**

The mandrel **247** comprises a pressure release mechanism (not shown) for facilitating placement of the object thereover. The mandrel may comprise channels axially passing along a length of the mandrel for preventing pressure buildup as the object **101** is advanced thereover. Alternatively, or additionally, the mandrel **247** can comprise an internal conduit passing thereinside and communicating with the volume of the object **101** and/or the volume between external surface of the mandrel **247** and the inner wall of the of the placed object **101.**

The mandrel **247** may be also configured to hold the object **101** placed thereover by an auxiliary mechanism (not shown). A vacuum pump may be used to apply vacuum conditions inside the volume of the object **101** and/or the volume between the external surface of the mandrel **247** and the inner wall of the placed object **101.** Alternatively, or additionally, the bendable skirt section **244** of the flexible/elastic friction imparting element **240** may have magnetic properties capable of applying retaining forces over the object **101** placed thereover. Yet additionally, or alternatively, the outer surface of the bendable skirt section **244** of the flexible/elastic friction imparting element **240** may be treated to enhance the friction it can apply over the internal wall of the object **101** placed over the mandrel **247.**

**Figs. 4A** to **4B** schematically illustrate a mandrel **250** (also referred to herein as a gripper) configuration of some possible embodiments utilizing a deformable flexible/elastic friction imparting element **260** configured to grip objects **101** when the deformable element **260** is longitudinally compressed, and show sectional views of the mandrel **250** before and after placing an object **101** thereover, respectively.

The gripper **250** includes a cap element **252,** a central longitudinal hollow channel/tube **254** passing along a central elongated axis of the mandrel **250,** a piston arrangement **257** sealably encircling the tube **254** and configured to axially slide thereover, and an elongated sleeve **258** coaxially attached to the tube **254** by one or more support elements **276.** The piston arrangement **257** comprises a generally disc-shaped base element **255** and a tubular/cylindrical piston element **259** distally and coaxially extending from base element **255,** and sealably mounted to slide over the tube **254.** The cap element **252** comprises a cylindrical barrel **261** projecting proximally from a bottom side thereof, coaxially encircling the central tube **254,** and configured to sealably accommodate the tubular piston element **259.** The deformable element **260** is generally a tubular element coaxially surrounding the tube **254** and having, a distal rim attached to a bottom part of the cap **252,** and a proximal rim attached to the base element **255** of the piston arrangement **257.**

The connections and interactions of such elements between each other give rise to two states of the mandrel **250:** an extended state, in which the deformable element **260** is substantially stretched longitudinally, as seen in **Fig. 4A****,** and a pressed state, in which the deformable element **260** is substantially compressed, as illustrated in **Fig. 4B****.** The object **101** is slid over the gripper **250** by changing the mandrel **250** into its extended state, wherein the deformable element **260** is longitudinally stretched, and is held by the gripper by changing the mandrel **250** into its pressed state, wherein the deformable element **260** is compressed and thereby protrudes radially over an outermost lip of the cap **252** and sleeve **258** elements to contact and apply radial pressure over an inner wall of the object **101.**

As will be described hereinafter, the mandrel **250** is a normally pressed/gripping mandrel configured to change into its extended/non-gripping (object release) state by application of fluid pressure (*e.g*., air or any other gaseous pressure). In the extended state shown in **Fig. 4A****,** a pressured fluid **262** (which may be air, steam, or any other fluid) is supplied by pressure unit **45** and made to flow through the hollow channel **254,** from a proximal section of the channel to a distal section thereof, as indicated by the direction of the arrows **262.** The fluid flow **262** exit through a distal opening of the tube **254** into a fluid chamber **253** formed in the cap element **252,** which closes the channel **254** at a distal end thereof. The fluid flow **262** is then redirected in a second direction from the fluid chamber **253** of the cap **252** via one or more fluid passages **263** formed in the cap element into a pressure chamber **265** formed in the cylindrical barrel **261and** sealably closed by the piston **259.** The pressure conditions evolving inside the pressure chamber **265** by the fluid flow **262** pushes the piston **259** in the second direction and causes the piston arrangement **257** to move in the second direction (proximally).

The deformable element **260** can be an elastic (or resilient) element configured to naturally restore a compressed state thereof, in which a circumferential section thereof protrudes radially above the surface of the gripper/mandrel for attaching an object placed over the gripper/mandrel thereto. In this configuration the piston arrangement **257** can be configured to move proximally under the fluid pressure inside the pressure chamber **265** against forces applied by the normally compressed deformable element **260,** for stretching the deformable element **260** and changing the gripper/mandrel into its non-gripping state. Accordingly, whenever the fluid pressure inside the pressure chamber **265** is removed, or reduced below a certain threshold pressure level, the elasticity of the deformable element **260** will pull the piston arrangement proximally, as it restores back into its compressed state, thereby expelling fluid/air from the pressure chamber **265** and changing the gripper/mandrel back into its pressed/gripping state.

A resistive/elastic element **266,** such as a spring, coupled to the base **255** of the piston arrangement **257,** is configured to at least partially resist the motion of the piston arrangement **257** in the second direction by applying a force on the piston arrangement **257** in the first direction. The resistive/elastic element **266** can be connected on one side thereof to the base **255** of the piston arrangement **257,** and on the other side thereof to the distalmost support element **276.** As the deformable element **260** is connected by a proximal end thereof to the base **255** of the piston arrangement **257,** and by a distal end thereof to the cap element **252,** as the piston arrangement **257** moves away from the cap element **252,** the deformable element **260** stretches longitudinally, and allows placing the object **101** over the gripper **250** by sliding it proximally along the outer walls of the gripper **250.**

In order to change the gripper **250** into its pressed state, shown in **Fig. 4B****,** the fluid flow **262** from the pressure unit **45** towards the cap element **252** is stopped, such that resistive/elastic element **266** pushes the piston arrangement **257** distally in the first direction, thereby discharging fluid material from the pressure chamber **265** and causing fluid flow **262'** in a reversed direction *i.e*., away from the cap element **252.** In this manner, the piston arrangement **257** slides distally over the tube **254** toward the cap element **252,** and thereby the deformable element **260** becomes compressed. When compressed, the deformable element **260** is configured to extend radially over the outermost lips of the sleeve **258** and the cap **252** elements. In this compressed state, the deformable element **260** comes into contact with, and circumferentially pressed against, the inner wall of the object **101,** thereby applying radial pressure over the inner wall of the object **101.** Via this pressure, the gripper **250** grips the object **101.**

Optionally, the cap element **252** is a dome shaped element. The cap element **252** includes at least one perforation **268** for enabling passage of air expelled from the inside of the object **101** into a region between the sleeve **258** and the channel **254,** during placement of the object **101** over the mandrel, as shown by the arrows **270** and **272.** This feature makes it easier for the object to be slid quickly over the gripper since air can be quickly discharged while sliding the object **101** on the mandrel **250.** Otherwise, the air trapped inside the object **101** between the cap element **252** and the distal inner wall of the object **101** would be compressed as the distal inner wall of the object **101** approaches the cap element **252** of the object **101,** and would buildup resistive pressure against the motion of the object toward the gripper.

The base element **252** of the piston arrangement **257** also includes one or more perforations **274**,and/or one or more second perforations **275** are also formed in the support element(s) **276** to allow the air expelled from the inside of the object **101** to further advance along the second direction toward the proximal end of the gripper, between the channel **254** and the sleeve **258.** Optionally, the region between the channel/tube **254** and the sleeve **258** at the proximal end of the gripper **250** is hollow and open. In this manner, the air from the inside of the object **101** can be channeled to the proximal end of the gripper and be released into open air/external environment.

The gripper **250** is elongated with a cylindrical surface. The deformable element **260** may comprise a single element looping around the gripper, or may include many elements located at predefined positions along a sectional circumference of the gripper. Optionally the piston arrangement **257** is a loop surrounding the hollow channel **254.** The elastic element **266** may comprise one or more resistive elements (*e.g*., springs) or may be a single resistive element, for example a single spring looping around/encircling the hollow channel **254.** The resistive/elastic element **266** can be thus disposed between the base **255** of the piston arrangement **257** and the support element **276,** not necessarily attached thereto.

**Fig. 4C** shows the mandrel **250** during removal of the object **101** therefrom. As seen, fluid material is flowed (**262**) distally by the pressure unit **45** through the central tube **254** into fluid chamber **253,** and therefrom into the pressure chamber **263,** to press the piston element **259** and cause the piston arrangement **257** to proximally slide over the tube **254** against the resistive power exerted by the resistive/elastic element **266.** The pressure fluid applied thus causes the deformable element **260** to longitudinally stretch, release the grip over the internal wall of the object **101,** and thereby change into the extended (release/non-gripping) state of the mandrel **250.** The object **101** is then distally slid over the mandrel **250,** thereby streaming air from the external environment through one or more of the perforations **275, 274,** and/or **268,** into the gradually increasing internal volume **177** between the cap element **252** and the internal distal wall of the object **101.** This way resistive vacuum pressures are substantially prevented for guaranteeing easy and smooth removal of the object **101** from the mandrel **250.**

The mandrel **250** is further configured to rotate about its elongated axis, and thereby rotate the object place thereon. The different elements of the gripper **250** can be fabricated from any material suitable for the functionalities described above *e.g*., metals, plastics, glasses. The deformable element **260** can be manufactured from any suitable elastic/flexible material, such as, but not limited to, rubber.

**Figs. 5A** to **5C** schematically illustrate a mandrel (also referred to herein as a gripper) configuration **280,** not being part of the present invention, utilizing an air flow configured for generating a buffering sleeve around the mandrel **280** for facilitating placement of an objects **101** thereover. Optionally, the mandrel **280** is configured to at least partially inflate the object **101.** **Figs. 5A** and **5B** show sectional views of the mandrel **280** while fluid/air pressure is on and the object **101** is slid onto the mandrel **280,** and **Fig. 5C** shows a sectional view of the mandrel **280** after air pressure has been decreased and inner wall surfaces of the object contacts and adheres to the mandrel **280.**

The gripper **280** includes an elongated hollow channel **282** traversing the gripper along a central axis of the mandrel **280,** an elongated fluid chamber/sleeve **284** surrounding the hollow channel **282** or at least part of it, and a hub arrangement **286** located at least partially inside the hollow channel **282,** and being configured for plugging the hollow channel **282.**

The hub **286** has at least one inlet conduit/tube **288** configured for receiving pressured fluid/air from the pressure unit **45,** and at least one fluid channel **281** communicating between the inlet conduit/tube **288** and the elongated chamber/sleeve **284** for directing the pressured fluid/air into the fluid chamber **284.** The flow of pressured fluid/air into the hub **286** is denoted by the arrowed line **290,** and the flow of pressured fluid/air through the conduit/tube **288** and into the fluid chamber **284** is denoted by the arrowed lines **292.**

The fluid chamber **284** has at least one outlet opening **294** for releasing fluid/air from the fluid chamber **284.** The outlet opening **294** is located in a vicinity of a distal end **296** of the fluid chamber **284.** The mandrel **280** comprises a plurality of outlet opening **294** circumferentially distributed over at least one circumferential section of the mandrel **280,** and configured to stream pressured fluid/air therefrom in radial directions.

As shown in **Fig. 5B****,** with this configuration, when the object **101** is slid over the gripper **280** and pressured fluid/air is streamed out from the fluid chamber **284** via its outlet openings **294,** a buffering fluid/air sleeve **291** is generated between the outer surface of the gripper **280** and inner walls of the object **101** by the fluid/air released by the openings **294,** almost as soon as the object **101** meets the gripper. The buffering fluid/air sleeve **291** at least partially inflates portions of the object **101** as it is progressively slid over the mandrel **280.** Optionally, the distal end of the chamber has a tapering shape. In this manner, the object **101** can be easily slid onto the distal end of the gripper before being inflated.

In this way, during the placement of the objects **101** over the mandrels **280** the objects **101** are "floating" over the mandrels, since the formation of the buffering fluid/air sleeve **291** provide for a contactless placement procedure. Thus, the objects **101** are slid over the mandrels **280** substantially without, or with negligibly small, resistive friction forces.

The pressured fluid/air flow released by the opening **294** is denoted by the arrows **298.** The object **101** is at least partially inflatable by the air flow at the opening **294,** as seen in **Fig. 5B****.** As the object **101** is pushed further onto the gripper **280,** an air cushion **291** is created by the air flow **298** between the gripper and the object **101.**

The fluid/air flow into the hub arrangement **286** (and therefore the air flow out of the fluid chamber **284**) is controllable. As shown in **Fig. 5C****,** as soon as the object **101** has been slid onto the gripper **280** by a desirable distance (*e.g*., when the cap of the object **101** contacts the distal end **296** of the chamber **284**), the fluid/air flow from the pressure unit **45** into the hub arrangement **286** is decreased or stopped altogether. In this manner, the fluid/air flow out of the chamber **284** is also lowered or stopped, and the air cushion **291** disappears. Therefore the object **101** deflates and adheres to the gripper **280.** In this manner, the gripper **280** is able to grip the partially inflatable object **101.**

The fluid chamber **284** has two or more openings (for example, three, four, or eight) being disposed so as to create the air cushion symmetrically with respect to the central axis of the gripper **280.**

The hub arrangement **286** includes at least one air passage **302** passing along its length and configured for receiving an air flow **304** pushed by the object **101** into the distal side of hollow channel **282** as the object **101** is slid along the gripper **280,** and for allowing the pushed air to exit the hollow channel **282** from a proximal side of hollow channel. In this manner, the pressure created by the air flow **304** into the hollow channel is released, as seen by the air flow **306** through the one or more passages **302.** This release eases the sliding of the object **101** onto the gripper **280** and prevents buildup of resistive pressure inside the object **101.**

The gripper **280** is elongated along its central axis. The gripper **280** has a circular cross section. **Fig. 5D** shows a top view of the mandrel **280.** This hub arrangement **286** comprises four air passages **302** passing along its length, and four fluid channels **281** radially extending from the inlet conduit/tube **288.** Greater, or smaller, number of air passages **302,** and/or greater, or smaller, number of fluid channels **281,** can be used.

In **Fig. 5D** each one of the fluid channels **281** is radially extending from the inlet conduit/tube **288** is a section of the hub located between two respective air passages **302,** but different arrangement can be similarly employed. Additionally, although four outlet openings **294** are shown in **Fig. 5D****,** greater, or smaller, number of outlet openings **294** can be similarly provided.

**Figs. 6A** and **6B** schematically illustrate a carriage system (also referred to herein as support platform) **400** configured for carrying and moving one or more arrays of mandrels **412.** The mandrels **412** can be implemented in form of any of the mandrel embodiments disclosed herein, and/or in international publication No. WO 2015/177599. The support platform **400** comprising two arrays of mandrels **412,** where each array of mandrels being arranged as a wing of mandrels, and each wing of mandrels **412**being detachable and replaceable.

The carriage system **400** includes a motor unit **404,** a first wing of mandrels **406** and a second wing of mandrels **408.** Each wing of mandrels further comprises mechanical elements (not shown *e.g*., axels, gear sprockets, and/or belts) configured to deliver rotary movement from the motor unit **404** to the mandrels (**412**). The carriage system **400** further includes a wagon **402** joined to the motor unit, for carrying all the above elements along a desired path. The path may be defined by a track, for example.

The motor unit **404** includes a first plurality of ports and a second plurality of ports (not shown), via which the motor unit **404** moves and operates each individual mandrel. The first and second plurality of ports are disposed on opposite sides of the motor. The first wing **406** is configured for joining the first set of mandrels **410** to the first plurality of ports, for enabling the motor unit **404** to move and operate the mandrels of the first set. Similarly, the second wing **408** is configured for joining the second set of mandrels **412** to the second plurality of ports, for enabling the motor to move and operate the mandrels of the second set.

The first wing **406** and the first set of mandrels **410** form a first apparatus are configured to be detachably joined to the motor unit **404.** Similarly, the second wing **408** and the second set of mandrels **412** form a second apparatus configured to be detachably joined to the motor unit **404.** This is shown in **Fig. 6B****.** In this manner, a plurality of mandrels (for example, 24 mandrels joined to the same wing) can be quickly replaced together as a block whenever arrays of objects having a different (either smaller or greater) internal diameter need to be carried by the carriage system **400.** In the non-limiting example shown in **Figs. 6A** and **6B****,** each wing **406/408** comprises three mandrels **412a, 412b** and **412c,** but of course, each wing can be configured to have a greater, or a smaller, number of mandrels **412.**

The quickness of object replacement, which can be achieved with this setup, enables faster throughput in treating/printing the objects. In this manner, when the treating/printing of the first arrays of objects is completed, the wings **406/408** with the mandrels of the first objects can be quickly detached from the motor unit **404** and the new wings for the new arrays of objects can be quickly joined to the motor unit **404.** This process reduces the waiting time that would occur is each mandrel had to be detached individually from the motor unit or if each object had to be replaced individually onto mandrels that are not detachable.

The motor(s) used in the motor unit **404** is an electric motor, or any other suitable motor capable of controllably producing rotary motion.

The wings of mandrels, **406** and **408,** are configured to attach to the carriage system **400** two parallel rows of mandrels **412** directed in opposite directions *i.e*., one row of mandrels being parallel and in the direction movement of the carriage, and the other row of mandrels being parallel and in a direction opposite to the carriage's movement direction. In such configurations the motor unit **404** can have a respective motor, and mechanical transmission components (not shown), mechanically coupled to each pair of mandrels belonging to the different wings **406** and **408** and that are adjacently located to each other *i.e.,* the pair of mandrels **412a, 412b** and **412c,** in same column.

**Figs. 7A** and **7B** schematically illustrate a carriage system **500** for carrying and moving mandrels **412,** the apparatus comprising a block comprising the mandrels **412** and a motor unit **504,** the block being detachable and replaceable from a carriage/support platform **502** configured to move carriage system **500** along a lane for treating objects carried by the mandrels.

The carriage system **500** is very similar to the system **400** described above with reference **Figs. 6A** and **6B****.** However, in the system **500,** the motor unit **504** is detachable from the wagon **502** as shown in **Fig 7B****.** The mandrels **412** are detachably or undetachably attached to the motor unit **504.** Therefore, rather than replacing one wing at a time, the motor unit **504** and all the mandrels **510** joined to the motor unit can be detached from the wagon together. The motor unit **504** can have a single motor, and mechanical transmission components (not shown), configured to transfer rotary movement generated by the motor to the mandrels. Alternatively, the motor unit **504** can have a respective motor, and mechanical transmission components (not shown), for transferring the rotary motion of the motor to a respective mandrel **412.**

The motor unit **504** comprises a respective motor, and mechanical transmission components (not shown), configured to transfer the rotary motion generated by the motor to a respective pair of mandrels **412a, 412b, 412c,** adjacently located to each other and belonging to different rows of mandrels.

One advantage of this configuration is that each of the mandrels do not need to be removed at all from the motor unit, and this may lengthen the lifetime of each mandrel. Another advantage lies in the quickness of replacement and enhancement of the throughput of treating/printing on the objects, as all of the arrays of mandrels **412** of a carriage can be quickly removed and replaced in a single operation.

**Fig. 8A** schematically illustrates a registration setup **415,** not being part of the present invention, configured to align angular orientation of objects **101** carried by the carriage system **12.** The carriage system **12** comprises two parallel rows of mandrels **412,** each row comprising three mandrels, **412a-c** and **412a'-c'.** Each row of mandrels horizontally extends from a respective face of an elongated support member **12s** of the carriage system **12,** such that the front row of mandrels **412a-c** extends from the support member **12s** in a direction opposite to the direction the rear row of mandrels **412a'-c'.**

Each pair of adjacently located mandrels is mechanically coupled to a respective motor, **Ma, Mb** and **Mc,** configured to rotate the respective pair of mandrels **412a-a', 412b-b',** and **412c-c',** at the same direction and speed. The treatment process applied to the objects **101** can be simplified in this case by aligning each pair of objects placed on adjacently located mandrels **412** *e.g.,* using an aligning/indexing mark **49.** An alignment process can be thus used to align the mark **49** on object **101a** with the mark **49** on object **101a',** and similarly align object **101b** with object **101b'** and object **101c** with object **101c'.**

The mandrels **412** are configured to generate a buffering fluid/air sleeve **291,** as described with reference to **Figs. 5A** to **5D****,** which is advantageously used to align the pairs of adjacently located objects **101a-101a', 101b-101b',** and **101c-101c'.** For this purpose the object immobilizing system **422** is used to immobilize the rear row objects **101a', 101b',** and **101c',** while the front row objects **101a, 101b,** and **101c,** are rotated until their marks **49** of the rear and front objects are aligned. The object immobilizing system **422** comprises an array of immobilizing units, **42a, 42b,** and **42c,** and a respective array of sensor units (*e.g*., utilizing imagers, such CCD or CMOS imagers), **43a, 43b,** and **43c,** mounted on a platform **422p** configured to move along a vertical rail **48.**

During the objects registration process the platform **422p** is moved downwardly towards the carriage system **12** until each one of the immobilizing units, **42a, 42b,** and **42c,** is located in a vicinity of a respective one of the rear row objects, **101a', 101b',** and **101c'.** Pressured fluid/air is then streamed through the rear row mandrels, **412a', 412b',** and **412c',** by the pressure unit **45** to generate the fluid/air buffering sleeves **291** around the rear row mandrels and make each of the rear row objects, **101a', 101b',** and **101c',** "float" over its respective mandrel. The pressurized fluid/air is selectively supplied only to the rear row mandrels, **412a', 412b',** and **412c',** such that only the rear row objects, **101a', 101b',** and **101c',** are caused to "float" over their respective mandrel, while the front row objects, **101a, 101b,** and **101c,** remain attached over their respective front row mandrels , **412a, 412b,** and **412c.**

In this state the immobilizing units, **42a, 42b,** and **42c,** are activated to apply by each immobilizing unit attraction forces over the respective rear row object **101a', 101b',** and **101c,** positioned therebelow, and thereby hold it substantially immobilized. The sensor units, **43a, 43b,** and **43c,** are used to record the location of the mark **49** in each rear row object, **101a', 101b',** and **101c',** and the motors, **Ma, Mb** and **Mc,** are then activated to rotate the mandrels **412.** Though all of the mandrels **412** are rotated, only the front row objects, **101a, 101b,** and **101c,** are rotated, as the rear row objects, **101a', 101b',** and **101c',** are immobilized due to the fluid/air buffering sleeves **291** formed around the rear row mandrels, **412a', 412b',** and **412c',** and the attraction forces applied by the immobilizing units, **42a, 42b,** and **42c.**

The sensor units , **43a, 43b,** and **43c,** monitor the movement of the marks **49** on the front row objects, **101a, 101b,** and **101c,** as they are being rotated, for stopping each of the motors, **Ma, Mb** and **Me,** when identifying that the marks **49** of the respective front and rear objects thereby rotated are aligned *i.e*., motor **Ma** is stopped when the mark **49** on object **101a** is aligned with the mark **49** on object **101a',** motor **Mb** is stopped when the mark **49** on object **101b** is aligned with the mark **49** on object **101b',** and motor **Mc** is stopped when the mark **49** on object **101c** is aligned with the mark **49** on object **101c'.**

Before activating the pressure unit **45** to form the fluid/air buffering sleeves **291** around the rear row mandrels the motors, **Ma, Mb** and **Mc,** are operated to rotate all the mandrels **412** for positioning the marks **49** on the rear row objects, **101a', 101b',** and **101c',** at a predefined angular location, to thereby put all of the rear row objects, **101a', 101b',** and **101c',** at the same angular position. The registration process can then proceed as described hereinabove and hereinbelow to align the marks **49** on the front row objects, **101a, 101b,** and **101c,** with the marks **49** on the rear row objects, **101a, 101b,** and **101c.** In this way, at the end of the registration process all of the objects **101** carried by the carriage system **12** are set into the same angular angle.

The marks **49** provided on the objects **101** can be implemented by any suitable marking techniques usable for adjusting the orientations of the objects. The marks **49** are optically detectable marks *e.g*., printed/painted marks, engraved marks, laser markers, and suchlike, but they may as well, or instead, comprise magnetically detectable marks, RF radiating marks, NMR detectable marks, and suchlike. The attraction forces applied by the immobilizing units, **42a, 42b,** and **42c,** can be implemented using suction/vacuum applicators, electromagnets, electric fields applicators, electrostatic forces applicators, or any combination thereof. Each immobilizing unit comprises at least one suction aperture **47** pneumatically coupled to a vacuum source (not shown) configured to controllably apply and stop the attraction forces applied on the objects **101.**

**Fig. 8B** shows a flowchart **90** of a registration process, not being part of the present invention. Referring now to **Figs. 8A** and **8B****,** in steps **P1** to **P4** orientation of the rear row objects, **101a', 101b',** and **101c',** is set by control unit **300** in step **P1** by generating control signals/data **324** for rotating all of the mandrels **412** (*i.e*., all objects carried by the carriage are rotated), processing in step **P2** the signals/data **322** generated by the sensor units , **43a, 43b,** and **43c,** to identify locations of the marks **49** on the rear row objects, and determining in step **P3** based on the received sensors signals/data **322** for each rear row object if its orientation is set to a predefined angular position. In step **P4** operation of the motors, **Ma, Mb** and **Mc,** is selectively stopped until angular position of all of the rear row objects, **101a', 101b',** and **101c',** is set *i.e.,* each motor is stopped upon determining that the respective object thereby rotated reached the desired angular position. As described hereinabove, setting the orientations of the rear row objects in steps **P1** to **P4** is performed if orientations of all objects carried by the carriage should be set to the same angular position. If step **P1** to **P4** are not performed, the remaining process steps **P5** to **P12** will just align the pair of adjacently located objects (**101a 101a'**), (**101b** and **101b'**), and (**101c** and **101c'**).

In step **P5** the control unit **300** generates control signals/data **320** for moving the platform **422p** of the immobilizing system **422** towards the carriage **12** to place each immobilizing unit, **42a, 42b,** and **42c,** adjacently above a respective rear row object, **101a', 101b',** and **101c'.** Concurrently, or shortly thereafter, in step **P6** the control unit **300** generates control signals/data **323** to activate the pressure unit **45** for supplying fluid/air pressure to the rear row mandrels, **412a', 412b',** and **412c',** and form fluid/air buffers **219** around them. After forming the fluid/air buffers **219** around the rear row mandrels, **412a', 412b',** and **412c',** in step **P7** the control unit **300** generates control signals/data **321** to activate the immobilizing units, **42a, 42b,** and **42c,** to thereby hold the rear row objects, **101a', 101b',** and **101c',** substantially immobilized.

In step **P8** control signals/data **324** are generated to rotate the mandrels **412.** All of the mandrels **412** of the carriage **12** are rotated in step **P8,** but since the rear row objects, **101a', 101b',** and **101c',** are held immobilized due to the attraction forces applied by the immobilizing units, **42a, 42b,** and **42c,** and the fluid/air buffers **291** formed around the rear row mandrels, **412a', 412b',** and **412c',** only the front row objects, **101a, 101b,** and **101c,** are actually rotated. In step **P9** the sensor signals/data **322** is processed to identify the locations of the marks **49,** and in step **P10** it is checked if each of the front row mandrels reached an angular position aligning it with the respective adjacently located rear row object.

In step **P11** control unit **300** selectively stops each of the motors, **Ma, Mb** and **Me,** upon determining that the object thereby carried is aligned with its respective adjacently located rear row object. After the motors, **Ma, Mb** and **Mc,** are stopped, in step **P12** the control unit **300** deactivates the pressure unit **45,** and in step **P13** deactivates the immobilizing units, **42a, 42b,** and **42c,** and moves the platform **422p** of the immobilizing system **422** away from the carriage **12.**

**Figs. 9A** and **9B** schematically illustrate inspection system **330** (**Ins** in **Fig. 1**), not being part of the present invention. **Fig. 9** demonstrates an inspection system **330** using a movable imager unit **16h** for scanning the outer surfaces of the objects **101.** The imager unit **16h** is mounted on a rail **256** located a distance above (or below) the objects **101** and configured to slide in lateral directions therealong *e.g*., using one or more motors and mechanical transmissions (not shown). The movement of the imager unit **16h** is controlled by the control unit **300,** which is also configured to receive acquired fragmental images i*ⱼ^{k}* (where *j*>0 and *k>0* are positive integers) from each object 101*^{j}*, and to tailor from the received fragmental images i*ⱼ^{k}* for each object **101*^{j}*** a mosaic image of its entire outer surface showing the treatment applied thereto and/or the patterns printed thereon.

The control unit **300** is configured to move the imager unit **16h** along the rail **256** when the translational movement of the streams of objects **101** is stopped, to acquire a fractional image i*ⱼ^{k}* within a circumferential strips **s*_{q}*** (where *q*>0 is a positive integer), of each object **101*^{j}*.** As the objects **101** may be continuously rotated in each stop, the imager unit **16h** may be moved multiple times over the rail **256** within each stop to acquire consecutive fractional images i*ⱼ*^{*k*+*1*}, i*ⱼ*^{*k*+}*²,*... of each circumferential strip **s*_{q}*,** until fragmental images on the entire circumferential strip **s*_{q}*** of each object **101^{j}** are obtained and tailored by the control unit **300.** This process is repeated for each step movement of the objects **101** until obtaining entire set of circumferential strips **s*₁***, **s*₂***, **s*₃*,**... , **s*_{q}*** for each of the objects **101.** The tailored strips of each object **101** can be then tailored by the control unit **300** to construct a mosaic image for each object showing the patterns printed on its outer surface.

Alternatively, if the objects **101** are continuously rotated in each stop, the control unit **300** can be configured to position the imager unit **16h** at discrete locations along the rail **256** for acquiring an entire circumferential strip **s*_{q}***, of each object **101*^{j}***, in a consecutive manner. In this case, the control unit **300** is configured to construct a mosaic of the circumferential strip **s*_{q}*** acquired for of the objects **101*^{j}***.

The imager unit **16h** can be configured to acquire fragmental images i*ⱼ^{k}* in a size of a single pixel, of a row of pixels, or a matrix of pixels. For example, the movable imager unit **16h** is an elongated imager unit, and in this case an ordered sequence of elongated images can be acquired by the control unit **300** within a single stop of the translational movement of the objects **101.** The sequence of elongated images acquired from each object can be then tailored by the control unit **300** to construct for each object a mosaic of elongated images showing the patterns printed on its outer surface.

The imager unit **16h** is configured to acquire elongated strips covering the entire length of each object **101.** Thus, the control unit **300** can be configured to consecutively place the imager unit **16h** at discrete locations along the rail **256** for acquiring elongated strip images of each object **101^{j}** as it is being rotated. In this way, for example, the control unit **300** first locate the imager unit **16h** near object **101¹** to acquire all elongated strip images thereof while it is being rotated, to thereby enable construction of a mosaic image thereof. The control unit **300** then moves the imager unit **16h** near object **101²** to acquire all elongated strip images thereof while it is being rotated, to thereby enable construction of a mosaic image thereof, and so on, until all strip images are acquired from all of the objects **101.** The support platform on which the streams of objects are mounted is then moved along the lane to place a new row of objects **101** for inspection, as described above.

Optionally, the imager unit **16h** comprises two or more imagers. For example, in some possible embodiments the imager unit **16h** comprises a high resolution imager (*e.g*., capable of imaging single microns sizes), and a low resolution imager (*e.g*., capable of imaging ten microns, or greater sizes).

The image unit **16h** is configured for movement in other directions. For example, the rail **256** may be configured to move up and down relative to the objects **101,** as exemplified in **Fig. 9B****.** Additionally, the imager unit **16h** is configured for movement in a plane substantially parallel to the plane in which the objects **101** are located *e.g.,* by using vertical rails **216** at discrete locations extending vertically from the horizontal rail **256,** or a matrix of interconnected rails (not shown), or by mounting the imager unit **16h** on a robotic arm (not shown).

When the imager unit **16h** is configured to move in a plane to acquire the images from the objects **101,** in each stop of the support platform the control unit **300** can move the imager unit **16h** in the plane in any desirable, or random, pattern to acquire fractional images i*ⱼ^{k}* from the objects, using any of the techniques described above *e.g.,* if the objects are continuously rotated, by sequentially acquiring circumferential images **s*_{q}*** from the objects **101,** by acquiring elongated strips images of entire objects. Optionally, the imager unit is moved in the plane to acquire images from objects in consecutive rows, so as to image one or more (or entire) streams of objects rotated on the support platform without requiring axial movements to be performed for the imaging.

The control unit **300** is configured to selectively acquire images from a limited number of objects **101** in each stream of objects carried by the support platform. In such selective sampling approach the control unit **300** may be configured to select certain objects as samples based on preset data, or randomly. The number of objects to be used as samples can be determined based on the number of objects carried by the support platform/carriage.

The imaging of the objects is performed without stopping the translational and rotational movement of the objects **101** *i.e.,* the objects are imaged while being rotated and axially moved. In this case the imaging unit can be a stationary and the images are spirally acquired, such that a diagonal strip image of the moved and rotated object is obtained. The control unit **300** can be configured to transform the diagonal strip image into a rectangular form using the a ratio of the rotational and axial velocities of the objects. For example, the control unit **300** can be configured and operable to determine from the ratio between the rotational and axial velocities of the objects a transformation angle, and use it to transform the diagonal strip images into rectangular images.

As shown in **Fig. 9B****,** the inspection system **330** comprise a plurality of imagers **16h,** each imager **16h** being configured for sideway (right-to left or left-to right) movement along a rail **256** located above (or below) a row of objects **101** of an objects array, to acquire imagery data from the objects. Each rail **256** can be configured to move vertically along rails **216** for further allowing lengthwise scanning of the objects **101** in the row or objects. The control unit **300** can be thus configured to generate control signals/data for moving each of the imagers **16h** in sideway directions along its respective rail **256** to acquire imagery data for object **101** in a certain row of obj ects, and/or vertically move the rail **256** along the rails **216** for positioning the imager **16h** at a desired location along the lengths of the objects **101** in the row. The control unit **300** can be configured to assign a respective movable rail **256** and its respective imager **16h** to each row of objects. Alternatively, or additionally, the control unit **300** can be configured to assign two or more of movable rails, and their respective imagers **16h** to a certain row of objects in the array of objects.

The inspection of the objects by one of more imaging units, as described herein and illustrated in the drawings, can be performed in any one of the object treatment processes **T1, T2** ... **T*n*,** along the lane **17** *e.g.,* in a printing zone, at the vision inspection zone (**Ins**), priming and/or curing zones. Optionally, the inspection of the objects by the one or more imaging units is performed in an unload zone prior to unloading of the objects from the lane **17.**

Terms such as top, bottom, front, back/rear, right, and left and similar adjectives in relation to orientation of the objects and system components, refer to the manner in which the illustrations are positioned on the paper, not as any limitation to the orientations in which the apparatus can be used in actual applications. It should also be understood that throughout this disclosure, where a process or method is shown or described, the steps of the method may be performed in any order or simultaneously, unless it is clear from the context that one step depends on another being performed first.

It will further be appreciated that the processes/methods described herein may be realized as computer executable code created using a structured programming language (*e.g.,* C), an object oriented programming language such as C++, or any other high-level or low-level programming language (including assembly languages, hardware description languages, and database programming languages and technologies) that may be stored, compiled or interpreted to run on at least one of the processing/control units, as well as heterogeneous combinations of processors, processor architectures, or combinations of different hardware and software. The processing may be distributed across a number of computerized devices, which may be functionally integrated into a dedicated standalone system. All such permutations and combinations are intended to fall within the scope of the present disclosure.

A control system suitable for use with embodiments described hereinabove may include, for example, one or more processors connected to a communication bus, one or more volatile memories (*e.g*., random access memory - RAM) or non-volatile memories (*e.g.,* Flash memory). A secondary memory (*e.g.,* a hard disk drive, a removable storage drive, and/or removable memory chip such as an EPROM, PROM or Flash memory) may be used for storing data, computer programs or other instructions, to be loaded into the computer system. For example, computer programs (*e.g*., computer control logic) may be loaded from the secondary memory into a main memory for execution by one or more processors of the control system. Alternatively or additionally, computer programs may be received via a communication interface. Such computer programs, when executed, enable the computer system to perform certain features of the present invention as discussed herein. In particular, the computer programs, when executed, enable a control processor to perform and/or cause the performance of features of the present invention. Accordingly, such computer programs may implement controllers of the computer system.

In an embodiment where the invention is implemented using software, the software can be stored in a computer program product and loaded into the computer system using the removable storage drive, the memory chips or the communications interface. The control logic (software), when executed by a control processor, causes the control processor to perform certain functions of the invention as described herein.

Features of the invention may be implemented primarily in hardware using, for example, hardware components such as application specific integrated circuits (ASICs) or field-programmable gated arrays (FPGAs). Implementation of the hardware state machine so as to perform the functions described herein will be apparent to persons skilled in the relevant art(s). Features of the invention can be implemented using a combination of both hardware and software.

## Claims

1. A gripper (250) for holding a hollow object (101) thereon, said gripper comprising a body assembly (258) configured to be at least partially received inside the object (101) and comprising a hollow part extending along a length thereof, a friction imparting element comprising a deformable element (260) attached to the body assembly (258) and configured to change between an engaged state in which contact with inner surface of the object (101) placed over the gripper (250) is established therewith, and a released state in which there is no contact with the inner surface of the object (101), and an attachment mechanism configured to cause the friction imparting element to engage the inner surface of the object when said object is placed over the gripper, said attachment mechanism having a ground normal state in which the friction imparting element is set into the engaged state , **characterized in that**
said attachment mechanism is configured to compress the deformable element (260) in the ground normal state such that some portion of said deformable element (260) is caused to protrude from the body assembly (258) and contact an inner wall of the object (101) placed thereover, and to stretch the deformable element (260) responsive to the application of fluid pressure to radially retract said some portion of the deformable element (260) and release the object; and
said gripper (250) comprising fluid passages (268, 274, 275) passing along a length of said gripper (250) for preventing resistive pressure buildups inside said hollow object (101) while it is being placed over the gripper (250), or removed therefrom.

2. The gripper (250) of claim 1 wherein the attachment mechanism comprises an actuator unit placed inside the body assembly (258) and configured to change the friction imparting element (260) into the released state for allowing placement of the object on, or removal of the object from, the gripper.

3. The gripper (250) of claim 1 or 2 comprising:
a cap element (252);
a central longitudinal hollow channel (254) passing along a central elongated axis of the gripper (250);
a piston arrangement (257) sealably encircling the central longitudinal hollow channel (254) and configured to axially slide thereover, said piston arrangement (257) having a generally disc-shaped base element (255) and a tubular piston element (259) distally and coaxially extending from said base element (255), and sealably mounted to slide over said central longitudinal hollow channel (254); and
an elongated sleeve (258) coaxially attached to said central longitudinal hollow channel (254) by one or more support elements (276),
wherein the cap element (252) comprises a cylindrical barrel (261) projecting proximally from a bottom side thereof, coaxially encircling the central longitudinal hollow channel (254), and configured to sealably accommodate the tubular piston element (259), and wherein the deformable element (260) is generally a tubular element coaxially surrounding the central longitudinal hollow channel (254) and having, a distal rim attached to a bottom part of the cap element (252), and a proximal rim attached to the base element (255) of the piston arrangement (257).

4. The gripper (250) of claim 3, wherein the cap element (252) is provided at a distal end of the gripper, the tubular piston element (259) is in fluid communication with a distal end of the central longitudinal hollow channel (254) and configured such that fluid flowing in a first direction from a distal end of the central longitudinal hollow channel (254) towards the tubular piston element (259) is directed in a second direction, which is opposite to the first direction, to move the tubular piston element (259) along the second direction, and wherein said gripper comprising an elastic element (266) coupled to the piston arrangement (257) and being configured for applying on the piston arrangement (257) a force in the first direction.

5. The gripper (250) of claim 4 wherein the elastic element comprises at least one spring.

6. The gripper (250) of any one of claims claim 3 to 5 wherein the cap element (252) comprises an internal cavity (253) in fluid communication with a distal end opening of the central longitudinal hollow channel (254), and one or more fluid passages (263) configured to direct fluid media (262) received from the central longitudinal hollow channel (254) towards the piston element (259).

7. A modular system (500) for holding and moving a plurality of objects (101), the system comprising:
a motor unit (504) having a first plurality of ports and a second plurality of ports, disposed in two groups on opposite sides of the motor unit (504);
a first plurality of grippers (412) and a second plurality of grippers (412), each one of said plurality of grippers configured according to any one of claims 1 to 6;
a first wing (406) and a second wing (408), the first wing (406) connecting the first plurality of grippers (412) to the first plurality of ports, and the second wing (408) connecting the second plurality of grippers (412)to the second plurality of ports, in order to enable the motor unit (504) to move each gripper (412) individually;
wherein the first plurality of grippers (412) and the first wing (406) form a first module, the first module being detachable from the motor unit (504), and the second plurality of grippers (412)and the second wing (408) form a second module, the second module being detachable from the motor unit (504).

8. A modular system (500) for holding and moving a plurality of objects (101), the system comprising:
a motor unit (504) having a first plurality of ports and a second plurality of ports, disposed in two groups on opposite sides of the motor unit (504);
a plurality of grippers (412) each configured according to any one of claims 1 to 6 for holding a respective one of the objects (101), the plurality of grippers being connected to the ports of the motor unit (504) in order to enable the motor unit (504) to move each of said plurality of grippers (412) individually; and
a wagon unit (502), joined to the motor unit (504), and configured for carrying the motor unit (504) and the plurality of grippers (412) joined thereto along a desired path;
wherein the motor unit (504), together with the plurality of grippers (412) joined thereto, is detachable from said wagon unit (502).

## Patentansprüche

1. Greifer (250) zum Halten eines hohlen Objekts (101) daran, wobei der genannte Greifer Folgendes umfasst: eine Körperanordnung (258), die zum mindestens teilweisen Aufnehmen im Innern des Objekts (101) konfiguriert ist und einen sich entlang einer Länge davon erstreckenden hohlen Teil umfasst, ein reibungsvermittelndes Element, das ein verformbares Element (260) umfasst, das an der Körperanordnung (258) angebracht und zum Wechseln zwischen einem Eingriffszustand, in dem Kontakt mit der Innenfläche des über dem Greifer (250) platzierten Objekts (101) hergestellt wird, und einem Freigabezustand konfiguriert ist, in dem kein Kontakt mit der Innenfläche des Objekts (101) besteht, und einen Anbringmechanismus, konfiguriert zum Bewirken, dass das reibungsvermittelnde Element mit der Innenfläche des Objekts in Eingriff kommt, wenn das genannte Objekt über dem Greifer platziert wird, wobei der genannte Anbringmechanismus einen Grundnormalzustand hat, in dem das reibungsvermittelnde Element in den Eingriffszustand gebracht wird, **dadurch gekennzeichnet, dass**
der genannte Anbringmechanismus zum Zusammendrücken des verformbaren Elements (260) im Grundnormalzustand konfiguriert ist, so dass bewirkt wird, dass ein Teil des genannten verformbaren Elements (260) aus der Körperanordnung (258) vorsteht und eine Innenwand des darüber platzierten Objekts (101) berührt, und dass er das verformbare Element (260) als Reaktion auf die Anwendung von Fluiddruck streckt, um den genannten Teil des verformbaren Elements (260) radial zurückzuziehen und das Objekt freizugeben; und
wobei der genannte Greifer (250) Fluiddurchgänge (268, 274, 275) aufweist, die entlang einer Länge des genannten Greifers (250) verlaufen, um einen resistiven Druckaufbau innerhalb des genannten hohlen Objekts (101) zu verhindern, während es über dem Greifer (250) platziert oder davon entfernt wird.

2. Greifer (250) nach Anspruch 1, wobei der Anbringmechanismus eine Aktuatoreinheit umfasst, die im Innern der Körperanordnung (258) angeordnet und zum Versetzen des reibungsvermittelnden Elements (260) in den Freigabezustand konfiguriert ist, um das Platzieren des Objekts auf dem Greifer oder das Entfernen des Objekts davon zu ermöglichen.

3. Greifer (250) nach Anspruch 1 oder 2, der Folgendes umfasst:
ein Kappenelement (252);
einen zentralen longitudinalen Hohlkanal (254), der entlang einer zentralen länglichen Achse des Greifers (250) verläuft;
eine Kolbenanordnung (257), die den zentralen longitudinalen Hohlkanal (254) dichtend umgibt und zum axialen Gleiten darüber konfiguriert ist, wobei die genannte Kolbenanordnung (257) ein allgemein scheibenförmiges Basiselement (255) und ein rohrförmiges Kolbenelement (259) aufweist, das sich distal und koaxial von dem genannten Basiselement (255) erstreckt und dichtend montiert ist, um über den genannten zentralen longitudinalen Hohlkanal (254) zu gleiten; und
eine längliche Hülse (258), die durch ein oder mehrere Stützelemente (276) koaxial an dem genannten zentralen longitudinalen Hohlkanal (254) angebracht ist,
wobei das Kappenelement (252) einen zylindrischen Zylinder (261) umfasst, der proximal von einer Unterseite davon vorsteht, den zentralen longitudinalen Hohlkanal (254) koaxial umgibt und zum dichtenden Aufnehmen des rohrförmigen Kolbenelements (259) konfiguriert ist, und wobei das verformbare Element (260) im Allgemeinen ein rohrförmiges Element ist, das den zentralen longitudinalen Hohlkanal (254) koaxial umgibt und einen an einem unteren Teil des Kappenelements (252) angebrachten distalen Rand und einen am Basiselement (255) der Kolbenanordnung (257) angebrachten proximalen Rand hat.

4. Greifer (250) nach Anspruch 3, wobei das Kappenelement (252) an einem distalen Ende des Greifers vorgesehen ist, das rohrförmige Kolbenelement (259) in Fluidverbindung mit einem distalen Ende des zentralen longitudinalen Hohlkanals (254) steht und so konfiguriert ist, dass in einer ersten Richtung von einem distalen Ende des zentralen longitudinalen Hohlkanals (254) zum rohrförmigen Kolbenelement (259) fließendes Fluid in eine der ersten Richtung entgegengesetzte zweite Richtung geleitet wird, um das rohrförmige Kolbenelement (259) entlang der zweiten Richtung zu bewegen, und wobei der genannte Greifer ein elastisches Element (266) umfasst, das mit der Kolbenanordnung (257) gekoppelt und zum Ausüben einer Kraft in der ersten Richtung auf die Kolbenanordnung (257) konfiguriert ist.

5. Greifer (250) nach Anspruch 4, wobei das elastische Element mindestens eine Feder umfasst.

6. Greifer (250) nach einem der Ansprüche 3 bis 5, wobei das Kappenelement (252) einen inneren Hohlraum (253) in Fluidverbindung mit einer distalen Endöffnung des zentralen longitudinalen Hohlkanals (254) und einen oder mehrere Fluiddurchgänge (263) umfasst, die zum Leiten von von dem zentralen longitudinalen Hohlkanal (254) aufgenommenen Fluidmedien (262) zum Kolbenelement (259) konfiguriert sind.

7. Modulares System (500) zum Halten und Bewegen mehrerer Objekte (101), wobei das System Folgendes umfasst:
eine Motoreinheit (504) mit einer ersten Mehrzahl von Anschlüssen und einer zweiten Mehrzahl von Anschlüssen, die in zwei Gruppen auf gegenüberliegenden Seiten der Motoreinheit (504) angeordnet sind;
eine erste Mehrzahl von Greifern (412) und eine zweite Mehrzahl von Greifern (412), wobei jeder der genannten Mehrzahl von Greifern gemäß einem der Ansprüche 1 bis 6 konfiguriert ist;
einen ersten Flügel (406) und einen zweiten Flügel (408), wobei der erste Flügel (406) die erste Mehrzahl von Greifern (412) mit der ersten Mehrzahl von Anschlüssen verbindet und der zweite Flügel (408) die zweite Mehrzahl von Greifern (412) mit der zweiten Mehrzahl von Anschlüssen verbindet, so dass die Motoreinheit (504) jeden Greifer (412) einzeln bewegen kann;
wobei die erste Mehrzahl von Greifern (412) und der erste Flügel (406) ein erstes Modul bilden, wobei das erste Modul von der Motoreinheit (504) abnehmbar ist und die zweite Mehrzahl von Greifern (412) und der zweite Flügel (408) ein zweites Modul bilden, wobei das zweite Modul von der Motoreinheit (504) abnehmbar ist.

8. Modulares System (500) zum Halten und Bewegen einer Mehrzahl von Objekten (101), wobei das System Folgendes umfasst:
eine Motoreinheit (504) mit einer ersten Mehrzahl von Anschlüssen und einer zweiten Mehrzahl von Anschlüssen, die in zwei Gruppen auf gegenüberliegenden Seiten der Motoreinheit (504) angeordnet sind;
eine Mehrzahl von Greifern (412), die jeweils gemäß einem der Ansprüche 1 bis 6 konfiguriert sind, um ein jeweiliges der Objekte (101) zu halten, wobei die Mehrzahl von Greifern mit den Anschlüssen der Motoreinheit (504) verbunden ist, so dass die Motoreinheit (504) jeden der genannten Mehrzahl von Greifern (412) einzeln bewegen kann; und
eine Wageneinheit (502), die mit der Motoreinheit (504) verbunden und zum Tragen der Motoreinheit (504) und der Mehrzahl der damit verbundenen Greifer (412) entlang eines gewünschten Weges konfiguriert ist;
wobei die Motoreinheit (504) zusammen mit der Mehrzahl von damit verbundenen Greifern (412) von der genannten Wageneinheit (502) abnehmbar ist.

## Revendications

1. Pince (250) destinée à maintenir sur celle-ci un objet creux (101), ladite pince comprenant un ensemble de corps (258) configuré pour être au moins partiellement reçu à l'intérieur de l'objet (101) et comprenant une partie creuse s'étendant sur une longueur de celle-ci, un élément applicateur de friction comprenant un élément déformable (260) fixé à l'ensemble de corps (258) et configuré pour passer d'un état de prise dans lequel un contact avec une surface interne de l'objet (101) placé sur la pince (250) est établi avec celle-ci, et un état relâché dans lequel il n'y a pas de contact avec la surface interne de l'objet (101), et un mécanisme de fixation configuré pour amener l'élément applicateur de friction à se mettre en prise avec la surface interne de l'objet lorsque ledit objet est placé sur la pince, ledit mécanisme de fixation ayant un état normal fondamental dans lequel l'élément applicateur de friction est mis dans l'état de prise, **caractérisé en ce que**
ledit mécanisme de fixation est configuré pour comprimer l'élément déformable (260) dans l'état normal fondamental de telle sorte qu'une partie dudit élément déformable (260) dépasse de l'ensemble de corps (258) et entre en contact avec une paroi interne de l'objet (101) placé au-dessus de celui-ci, et pour étirer l'élément déformable (260) en réponse à l'application d'une pression de fluide pour rétracter radialement ladite une partie de l'élément déformable (260) et relâcher l'objet ; et
ladite pince (250) comprenant des passages de fluide (268, 274, 275) passant le long d'une longueur de ladite pince (250) pour empêcher des accumulations de pression résistive à l'intérieur dudit objet creux (101) lorsqu'il est placé sur la pince (250) ou retiré de celle-ci.

2. Pince (250) selon la revendication 1, dans laquelle le mécanisme de fixation comprend une unité d'actionneur placée à l'intérieur de l'ensemble de corps (258) et configurée pour faire passer l'élément de friction (260) à l'état relâché pour permettre le placement de l'objet sur la pince ou le retrait de l'objet de celle-ci.

3. Pince (250) selon la revendication 1 ou 2 comprenant :
un élément de coiffe (252) ;
un canal creux longitudinal central (254) passant le long d'un axe central allongé de la pince (250) ;
un agencement de piston (257) entourant de manière étanche le canal creux longitudinal central (254) et configuré pour coulisser axialement par-dessus celui-ci, ledit agencement de piston (257) ayant un élément de base généralement en forme de disque (255) et un élément de piston tubulaire (259) s'étendant distalement et coaxialement à partir dudit élément de base (255), et monté de manière étanche pour coulisser par-dessus ledit canal creux longitudinal central (254) ; et
un manchon allongé (258) fixé coaxialement audit canal creux longitudinal central (254) par un ou plusieurs éléments de support (276),
dans lequel l'élément de coiffe (252) comprend un barillet cylindrique (261) faisant saillie proximalement à partir d'une face inférieure de celui-ci, encerclant coaxialement le canal creux longitudinal central (254), et configuré pour accueillir de manière étanche l'élément de piston tubulaire (259), et dans lequel l'élément déformable (260) est généralement un élément tubulaire entourant coaxialement le canal creux longitudinal central (254) et comportant, une couronne distale fixée à une partie inférieure de l'élément de coiffe (252), et une couronne proximale fixée à l'élément de base (255) de l'agencement de piston (257).

4. Pince (250) selon la revendication 3, dans laquelle l'élément de coiffe (252) est fourni à une extrémité distale de la pince, l'élément de piston tubulaire (259) est en communication fluidique avec une extrémité distale du canal creux longitudinal central (254) et configuré de telle sorte que le fluide s'écoulant dans une première direction à partir d'une extrémité distale du canal creux longitudinal central (254) vers l'élément de piston tubulaire (259) soit dirigé dans une deuxième direction, opposée à la première direction, pour déplacer l'élément tubulaire de piston (259) dans la deuxième direction, et dans lequel ladite pince comprenant un élément élastique (266) couplé à l'agencement de piston (257) et étant configurée pour appliquer sur l'agencement de piston (257) une force dans la première direction.

5. Pince (250) selon la revendication 4, dans laquelle l'élément élastique comprend au moins un ressort.

6. Pince (250) selon l'une quelconque des revendications 3 à 5 dans laquelle l'élément de coiffe (252) comprend une cavité interne (253) en communication fluidique avec une ouverture d'extrémité distale du canal creux longitudinal central (254), et un ou plusieurs passages de fluide (263) configurés pour diriger des milieux fluides (262) reçus à partir du canal creux longitudinal central (254) vers l'élément de piston (259).

7. Système modulaire (500) pour retenir et déplacer une pluralité d'objets (101), le système comprenant :
une unité motrice (504) comportant une première pluralité de ports et une seconde pluralité de ports, disposés en deux groupes sur des côtés opposés de l'unité motrice (504) ;
une première pluralité de pinces (412) et une seconde pluralité de pinces (412), chacune de ladite pluralité de pinces étant configurée selon l'une quelconque des revendications 1 à 6 ;
une première aile (406) et une seconde aile (408), la première aile (406) connectant la première pluralité de pinces (412) à la première pluralité de ports, et la seconde aile (408) connectant la deuxième pluralité de pinces (412) à la seconde pluralité de ports, afin de permettre à l'unité motrice (504) de déplacer chaque pince (412) individuellement ;
dans lequel la première pluralité de pinces (412) et la première aile (406) forment un premier module, le premier module étant détachable de l'unité motrice (504), et la seconde pluralité de pinces (412) et la seconde aile (408) forment un second module, le second module étant détachable de l'unité motrice (504).

8. Système modulaire (500) pour maintenir et déplacer une pluralité d'objets (101), le système comprenant :
une unité motrice (504) comportant une première pluralité de ports et une seconde pluralité de ports, disposés en deux groupes sur des côtés opposés de l'unité motrice (504) ;
une pluralité de pinces (412) configurées chacune selon l'une quelconque des revendications 1 à 6 pour maintenir un objet respectif des objets (101) respectifs, la pluralité de pinces étant connectée aux ports de l'unité motrice (504) afin de permettre à l'unité motrice (504) de déplacer individuellement chacune de ladite pluralité de pinces (412) ; et
une unité de wagon (502), reliée à l'unité motrice (504) et configurée pour transporter l'unité motrice (504) et la pluralité de pinces (412) qui y sont reliées le long d'un trajet souhaité ;
dans lequel l'unité motrice (504), ainsi que la pluralité de pinces (412) qui y sont reliées, sont détachables de ladite unité de wagon (502).
